# EUROPEAN PATENT APPLICATION

(11) **EP 3 928 941 A1**
(43) Date of publication of application: **29.12.2021**
(21) Application number: 21179433.4
(22) Date of filing: 15.06.2021
(51) Int. Cl.: B27M 1/08, B23D 59/00

(54) **MACHINE FOR WORKING PANELS**

(30) Priority: 26.06.2020 IT 202000015511
(71) Applicant: SCM Industria S.P.A., 47891 Falciano (RSM) (SM)
(72) Inventor: ERCOLANI, Daniele, 47891 FALCIANO (RSM) (SM)
(74) Representative: Tiburzi, Andrea

(57) **Abstract**

The present invention relates to a Machine (1) for working panels, such as wooden panels and the like, comprising a working bench (2), at least one working group (4), for working said panels to be worked on said working bench (2), and guide means (3; 230) for guiding at least a movable element (6; 22) of said machine with respect to said working group (4), wherein said machine (1) is characterized in that it comprises a supporting member (6) comprising: coupling means (7), couplable to, or arranged on said working bench (2), and locking and release means (8), intended for locking and releasing a device provided with a screen (T), said locking and release means (8) being coupled to said coupling means (7); and in that said supporting member (6) is movable with respect to said working group (4) by means of said guide means (3; 230); so that said supporting member (6) allows the placement of said device provided with a screen (T) with respect to said working group (4). The present invention also related to a supporting member (6).

## Description

The present invention relates to an improved machine for working panel.

### Field of the invention

More specifically, the invention relates to a machine for working panels, in particular wooden panels and the like, equipped with linear sliding guides, and a screen, for example, a tablet screen, coupled to said machine.

The present invention also relates to a support member, for providing a machine for working panels with said screen.

In the following, the description will be directed to a machine for working panels made of wood, resin, fiberglass, and the like. However, it is clear that the description itself should not be considered limited to this specific use.

### Prior art

As is well known, machines for machining wooden panels and the like are equipped with sliding guides, for example, to adjust the positioning of the panels to be machined and/or to move them with respect to the machining tools, such as circular saws, band saws, cutters, etc..

In particular, such machines according to the prior art generally comprise:
- a working bench,
- a plurality of working groups, for working the panels to be machined arranged on said working bench, such as, for example, circular saws, cutters and/or linear saws, and
- at least one linear sliding guide, generally arranged at an outer edge of said working bench, and
- a carriage, slidingly coupled to said sliding guide so as to allow the movement of a panel to be worked on said working bench.

Said carriage can, for example, be positioned in such a way as to be flush with the blade with one of said working group, for example with the circular saw.

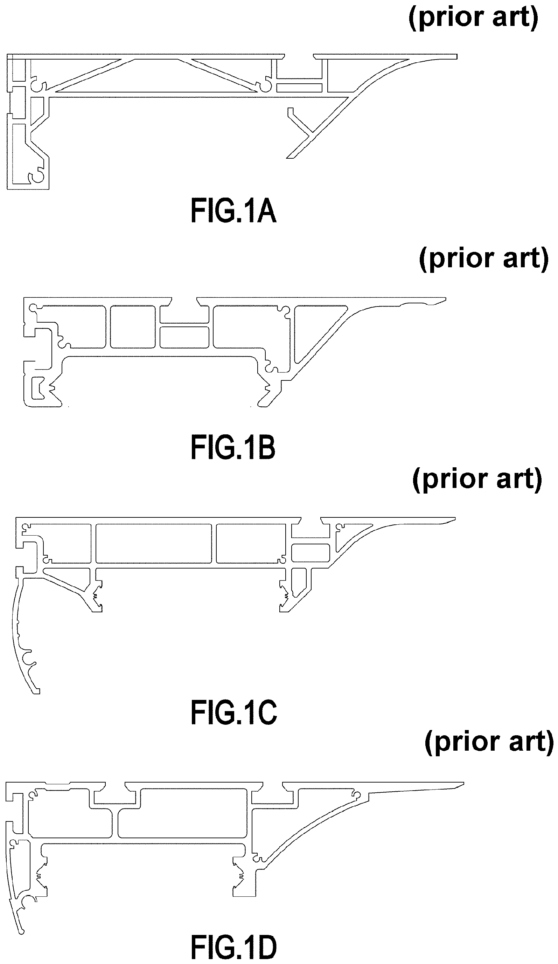

Examples of linear guide profiles in machines of the prior art are shown in figures 1A-1E.

The machines of the prior art thus described can perform multiple machining on said panels to be machined.

In fact, it is possible to work said panels with a first working group, for example by making them slide by means of said carriage on said circular saw, and subsequently to change machining, for example by moving the panel on the working bench and working it with a second working group coupled to said sliding guide.

Furthermore, such machines can be equipped with screens, in particular touchscreen type screens, fixed inside them, to select the desired working and display the step thereof.

However, the configuration thus described has the drawback of allowing access to the screens only at predetermined points of the machine.

Therefore, during the working of a panel, an operator could be unable to view the screen at issue, having to memorize the individual working steps to be performed.

Also, in case of a screen break, the whole machine must be sent to repair.

### Scope of the invention

In the light of the above, it is, therefore, an object of the present invention to provide a machine for working panels, which allows overcoming the aforementioned problems.

In particular, the object of the present invention is to provide a machine for working wooden panels and the like, which allows the screens associated with it to be viewed during all the working steps of said panels.

Furthermore, the object of the present invention is that this machine has reduced maintenance and repair costs.

A further object of the present invention is that the overall space of said machine is optimized.

Finally, the object of the present invention is to provide a support member for transforming the machines of the prior art into a machine of the above type.

### Object of the invention

It is therefore specific object of the present invention, a machine for working panels, such as wooden panels and the like, comprising a working bench, at least one working group, for working said panels to be worked on said working bench, and guide means for guiding at least a movable element of said machine with respect to said working group, wherein said machine is characterized in that it comprises a supporting member comprising coupling means, couplable to, or arranged on said working bench, and locking and release means, intended for locking and releasing a device provided with a screen, said locking and release means being coupled to said coupling means, and in that said supporting member is movable with respect to said working group by means of said guide means, so that said supporting member allows the placement of said device provided with a screen with respect to said working group.

Still, according to the invention, said guide means may comprise a sliding guide, arranged along a sliding direction, in particular along a working direction of said panels, for example a cutting line of said panels. Further, said working bench may comprise a stationary portion with respect to said working group and a movable portion with respect to said stationary portion, slidingly coupled to said sliding guide, for moving said movable portion with respect to said stationary portion along said sliding direction.

Always, according to the invention, said supporting member may be coupled to said movable portion of said working bench by mean of said coupling means.

Further, according to the invention, said guide means may comprise a slot arranged on said working bench and oriented along a sliding direction, in particular along said working direction of said panels, for example said cutting line of said panels. In this case, said coupling means may be slidingly coupled to said slot and are able to be tightened in a removable manner to said slot.

In particular, said slot may be arranged on said movable portion of said working bench.

Always, according to the invention, said coupling means may comprise a sliding member, slidingly couplable to said at least one slot, and a pin, having an end coupled to said sliding member. Said pin may also have an external portion, externally arranged to said at least one slot, wherein said external portion is coupled to said locking and release means.

In addition, according to the invention, said supporting member may comprise a nut tightening mechanism for said removable tightening of said coupling means to said slot.

Further, according to the invention, said end of said pin may be rotatably coupled to said sliding member.

In particular, according to the invention, said supporting member may comprise an elastic ring for coupling said pin and said sliding member.

Alternatively, according to the invention, said end of said pin may be fixed to said sliding member, and said coupling means may comprise a wing nut coupled to said external portion of said pin and to said locking and release means. In particular, said wing nut may be capable of rotating around to said pin.

Always, according to the invention, said locking and release means may comprise a tightening plate and two or more adjustable arms, each one fixed to said tightening plate at one end.

Still, according to the invention, said locking and release means may comprise a charger device, for charging the batteries of said device provided with a screen.

Further according to the invention, said machine may comprises said device provided with a screen. In this case, according to the invention, said device provided with is a touchscreen type screen, in particular a tablet.

It is further object of the present invention a supporting member for a machine for working wooden panels and the like, wherein said machine is provided with a working bench, a working group and guide means for guiding at least one movable element on said machine with respect to said working group, said supporting member comprising coupling means, couplable to said working bench, so that said supporting member is movable with respect to said working group by means of said guide means, and locking and release means, intended for locking and releasing a device provided with a screen, fixed to said coupling means. In particular, said supporting member according to the invention may be any supporting member comprised in a machine according to the present invention.

### Brief description of the figures

The present invention will be now described, for illustrative but not limitative purposes, according to its preferred embodiments, with particular reference to the figures of the enclosed drawings, wherein:
figures 1A - 1E show, in a cross-sectional view, examples of profiles of sliding guides comprised in machines for working wooden panels and the like of the prior art;
figure 2A shows, in a perspective view, a machine according to the present invention, comprising working members, a slot and a tablet coupled, by means of a support device, to said slot;
figure 2B shows detail A of the machine of figure 2A, on which further working members have been arranged;
figure 2C shows the enlargement of the detail B of figure 2A, comprising said tablet coupled to said slot;
figure 3A shows, in a perspective view, the front portion of a tablet holder included in a machine and in a support device according to the present invention, said tablet holder comprising a tightening plate equipped with adjustable arms;
figure 3B shows, with a perspective view, the tablet holder of figure 3A during its rotation in the space;
figure 3C shows, with an exploded perspective view, the front portion of the tightening plate of the tablet holder of figure 3A;
figure 3D shows, with a perspective view, the rear portion of the tightening plate of the tablet holder of figure 3A;
figure 4 shows, in a perspective view, a rear portion of a first embodiment of a support device according to the present invention, comprising the tablet holder of figure 3A coupled to a relative tablet;
figure 5A shows a rear view of the support device of figure 4;
figure 5B shows a side view of the support device of figure 4;
figure 6A shows, in a perspective view, a machine for working wooden panels and the like according to the present invention, equipped with a slot and with the support device of figure 4, slidingly coupled to said slot, said machine being arranged in a first configuration, in which the tablet screen is directed towards a first working direction;
figure 6B shows, in a perspective view, the machine of figure 6A, in a second configuration, in which the tablet is directed towards a second working direction;
figure 7 shows, with a perspective view, a rear portion of a second embodiment of a support device according to the present invention, comprising the tablet holder of figure 3A coupled to a relative tablet;
figure 8A shows, in a perspective view, an element of the supporting device included in the support device of figure 7;
figure 8B shows, with a partially exploded view, the element of figure 8A;
figure 9A shows a rear view of the supporting device of figure 7;
figure 9B shows a side view of the support device of figure 7;
figure 10A shows, in a perspective view, a machine for working wooden panels and the like according to the present invention, equipped with a slot and the support device of figure 7 slidingly coupled to said slot, said machine being arranged in a first configuration, in which the tablet screen is directed towards a first working direction;
figure 10B shows, in a perspective view, the machine of figure 10A, in a second configuration, in which the tablet screen is directed towards a second working direction;
figure 11A shows, with a perspective view, a first charger device equipped with a USB type socket, which can be included in a machine and in a supporting device according to the present invention;
figure 11B shows, with a perspective view, a second charger device of the wireless type, which can be comprised in a machine and in a supporting device according to the present invention; and
figures 12A - 12D show, with four distinct perspective views, a machine for working wooden panels and the like according to the present invention, equipped with a slot, a support device slidingly coupled to said slot, and a tablet coupled to said supporting device, said machine being arranged in four distinct configurations, depending on the position of the tablet with respect to said slot.

### Detailed description of the figures

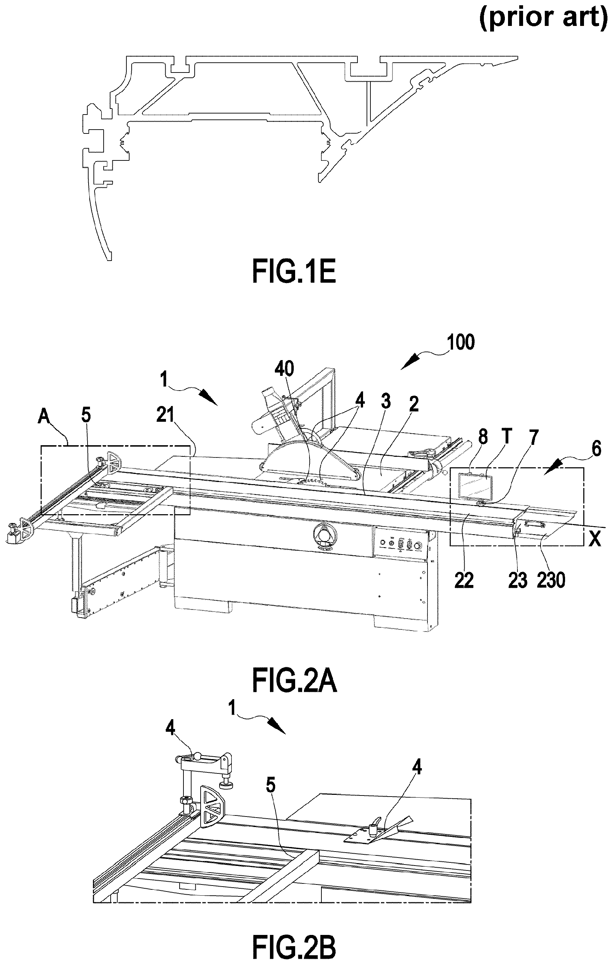

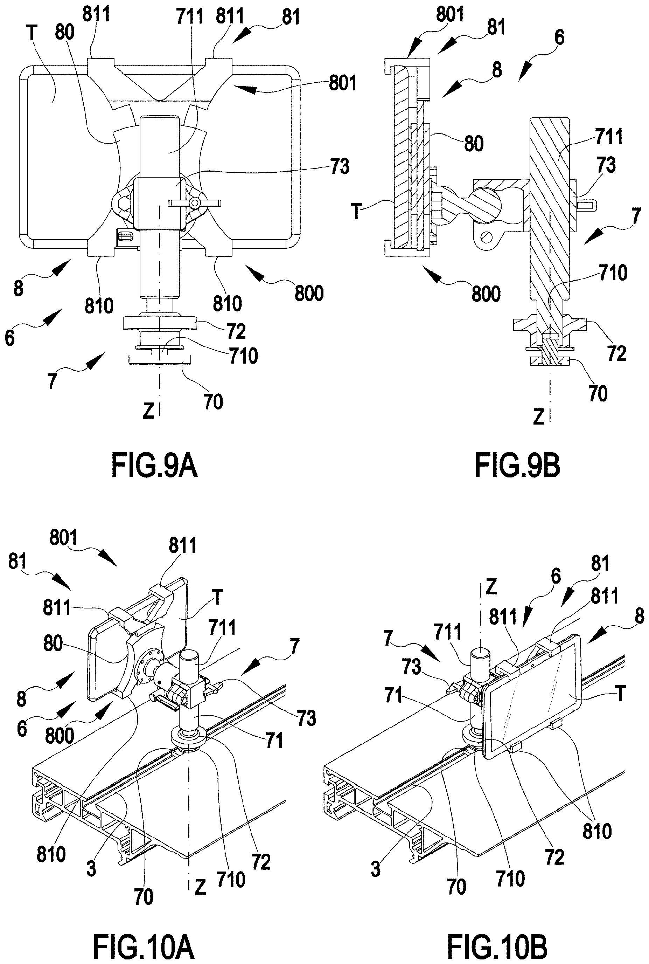

With reference to figures 1 - 12, the numerical reference 1 will be assigned to a machine for working wooden panels and the like equipped with a device with a screen, in particular a device with a touchscreen type T, such as a tablet T, slidably arranged on said machine 1.

The tablet T is configured with a specific program, in such a way as to allow selecting and viewing the workings to be carried out on the panel to be machined.

In particular, the machine 1 for working wooden panels and the like comprises
- a working bench 2,
- at least one slot 3, or upper sliding guide 3, arranged on said working bench 2 along a sliding direction X, preferably parallel to a cutting direction of said panels to be machined, and
- at least one working group 4, for working the panels to be worked on said working bench 2, said panels to be worked being movable on said working bench 2 along said sliding direction X.

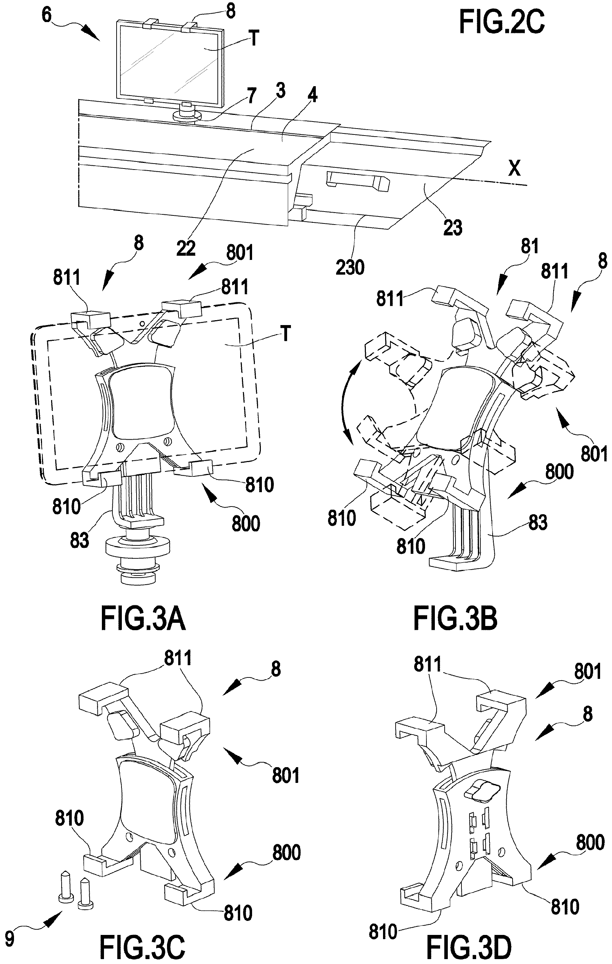

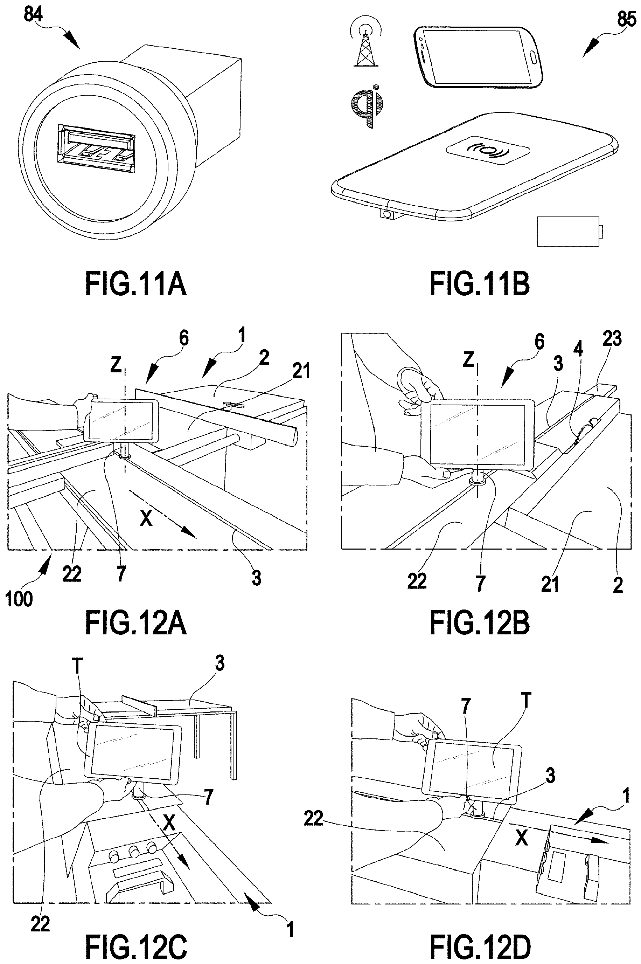

With particular reference to figures 2A, 2C, and 12A - 12D, said working bench 2 comprises a stationary portion 21, and a movable portion 22.

In the particular embodiment shown in figure 2A, said movable portion 22 is adjacent and coplanar to said stationary portion 21.

The machine 1, in fact, comprises a fixed shaped plate 23, arranged laterally to said stationary portion 21 and below it. The shaped plate 23 comprises a sliding guide 230, in particular a lower sliding guide 230, arranged along said sliding direction X.

Said movable portion 22 is slidingly coupled to said lower sliding guide 230 by means of sliding coupling means, so as to be able to slide along said sliding direction X. Furthermore, the sliding coupling means of said movable portion 22 can be tightened to said lower sliding guide 230, so as to block its sliding.

Furthermore, in the particular embodiment shown, said movable portion 22 has a longer length than said stationary portion 21.

In alternative embodiments, the movable portion 22 can be coupled in a sliding manner with respect to said stationary portion in a different way with respect to that described, for example by being coupled to a sliding guide 230, arranged on a different support with respect to said shaped plate 23.

As regards the slot 3, with particular reference to figure 2B, this can be a slot 3, commonly present on machines 1 for working wooden panels and the like.

In particular, this slot 3 can be shaped in such a way that one or more of the following working groups 4 can be coupled to it: a piece-tightening arm, a wood-stop member, or a shelf for working a panel to be machined with the tenoning technique.

In the particular embodiment shown in figures 2 and 12, the slot 3 is arranged in correspondence with a lateral edge of the movable portion 22 of said working bench 2.

The machine 1 also comprises a carriage 5, slidingly coupled to said working bench 2, being arranged on said movable portion 22, so as to allow the movement of said panel to be worked on at least a portion of said working bench 2 along said sliding direction X.

In this embodiment, a circular saw 40 arranged on said stationary portion 21 of the working bench 2 is comprised between the working units 4, and the carriage 5 has such a shape and size as to slide on said working bench 2 at the flush of the blade, with said circular saw 40.

The machine 1 shown in the figures also comprises said tablet T, removably coupled to said slot 3.

In fact, the machine 1 comprises:
a supporting member 6 for said tablet T, also said supporting member 6, comprising:
   coupling means 7, slidingly coupled to said slot 3 and removably thightenable thereon, and
   locking and release means 8, coupled to said coupling means 7 and removably coupled to said tablet T.

Advantageously, in this way, the possibility of moving said tablet T with respect to the fixed elements of said machine 1 is guaranteed, in particular with respect to the stationary portion 21 of the working bench 2 and the relative fixed working units 4, to make it easier the display of the screen of said tablet T to an operator during the use of said machine 1. In alternative embodiments, not shown in the figures, the slot 3 can be arranged on said stationary portion 21 of the working bench, and said movable portion 22 may not be present.

In a further alternative embodiment, not shown in the figures, a device with a screen, such as the tablet T, can be removably coupled by means of said locking and release means 8 and/or by means of further coupling means, directly on said movable portion 22 of the working bench 2, without the presence of said slot 3 being necessary. In this case, the tablet T can be moved with respect to the fixed elements of said machine 1 simply by moving said movable portion 22. Furthermore, said locking and release means 8 can be fixed on said movable portion 22, or coupled to said movable portion 22, being tightened to it in a removable manner by means of removable coupling means, such as for example a pin.

Therefore, the machine 1 can comprise at least one supporting member 6 for said tablet T, said supporting member 6 being movable with respect to said working bench 2, due to the presence of guide means 3; 230, such as the sliding guide 230 for the movable portion 22 of the working bench 2 and/or the slot 3.

The guide means 3; 230, therefore, allow to guide movable elements on the working bench 2, such as the supporting member 6 and/or said movable portion 22, on which the supporting member 6 is arranged, with a direct movement preferably along the cutting direction X of the working groups 4. This configuration allows to position said tablet T in the most comfortable working position for the operator with respect to said working groups 4.

Furthermore, the supporting member 6 can be removably coupled to said working bench 2, due to the presence of the coupling means 7, in particular of coupling means 7, which can be tightened on said working bench 2 in a removable manner.

In the embodiments shown in the figures, the locking and release means 8 comprise in turn a tightening plate 80 for the tablet T and adjustable arms 81 fixed to a respective end of said tightening plate 80, to ensure the socket of the tablet T, regardless of its size.

By way of example, the adjustable arms 81 can be four, in particular two lower arms 810, and two upper arms 811, and can be adjusted with a snap-type mechanism.

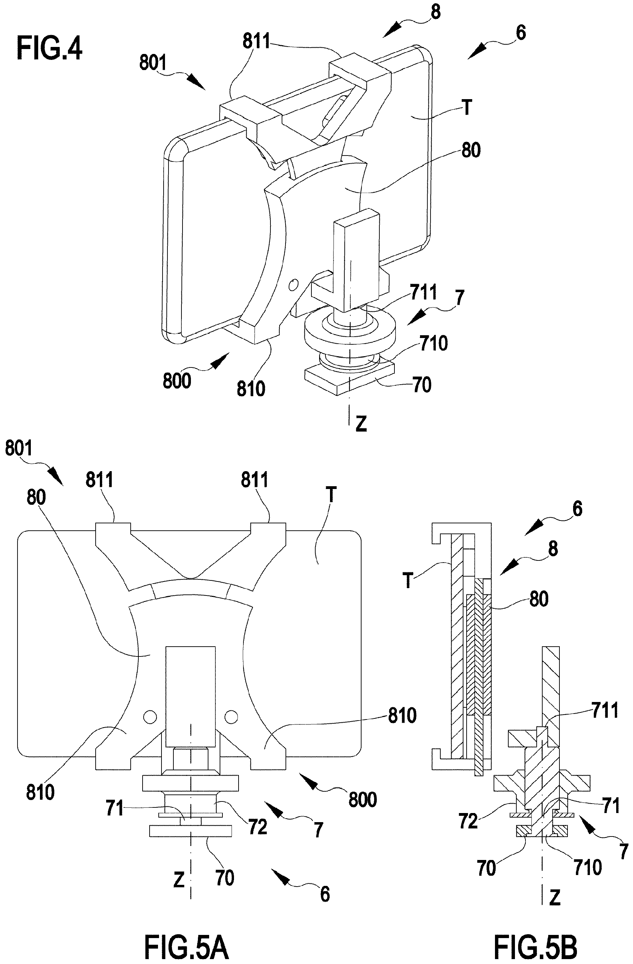

In fact, as shown in figures 3 and 4, said tightening plate 80 can comprise a fixed lower portion 800, on which said lower arms 810 are fixed, and a movable upper portion 801, on which said upper arms 811 are fixed. The upper portion 801 is slidingly coupled to said lower portion 800.

In particular, the upper portion 801 can be locked with respect to the lower portion 800 in certain positions, for example by acting on a tightening knob 82, as shown in the example of figure 3D.

The tightening plate 80 can be finally coupled to said coupling means 7, by means of screws 9 arranged along with internal guides of the tightening plate 80, as better illustrated below.

Furthermore, the locking and release means 8 can comprise a base 83, coupled to said lower portion 801 of said tightening plate 80, to allow the tablet T to rotate with respect to its viewing plane, as shown in figure 3B, and possibly also the modification of the inclination of said viewing plane.

However, in alternative embodiments, such locking and release means 8 can take different forms from the one described.

Finally, the tightening plate 80 can be equipped with a charger device 84, 85 to recharge the batteries of said tablet T, for example, a charger device equipped with a USB socket 84, such as the one shown in figure 11A or a wireless charger device 85, as shown in figure 11B. In further embodiments, said charger device 84, 85 can also be arranged in correspondence with different parts of the machine 1.

With particular reference to figures 4 - 6, the coupling means 7 of said supporting member 6 comprise:
- a sliding member 70, in particular a gib 70, arranged inside said slot 3, and
- a pin 71, comprising an end 710, fixed to said sliding member 70, and an external portion 711, arranged externally to said slot 3, and coupled to said locking and release means 8.

The sliding member 70 is configured to slide inside said slot 3, and can be registered inside said slot 3, namely to have a shape and dimensions such as to prevent any interplay during its sliding inside the slot 3 itself.

The end 710 of the pin 71 is coupled to said sliding member 70, so that said pin 71 moves integrally with it, with rotation freedom. By way of example, the coupling between said end 710 of pin 71 and said sliding member 70 can take place by means of an elastic ring, and specifically a C-clip type snap ring, also called Seeger ring, which prevents vertical translation of said pin 71, allowing at the same time the rotation of the pin 71 with respect to the sliding member 70.

In this case, every time it is desired to rotate the tightening plate 80, and then the tablet T associated therewith around the Z-axis of said pin 71, it has to act on said pin 71, turning on itself.

Furthermore, in the particular embodiment shown in figures 4 - 6, the outer portion 711 of said pin is coupled to the base 83 of said locking and release means 8. In this way, the tablet T can advantageously rotate around several axes.

Furthermore, the supporting member 6 can comprise a locking mechanism with nut 72 or locking nut 72, for the removable tightening of said coupling means 7 on said slot 3. In particular, the pin 71 can be a knurled pin, and said tightening nut 72 can comprise a knurled through hole 720, with knurls complementary to said pin 71.

In this case, said tightening nut 72 will be inserted on said pin 71, between said end 710 and said outer portion 711, in such a way as to be able to pass through a first configuration, in which it is not tightened on said slot 3, such as to allow the sliding of said sliding member 70 inside said slot 3, to a second configuration, in which it is tightened on said slot 3, preventing the sliding of said sliding member 70 inside said slot 3.

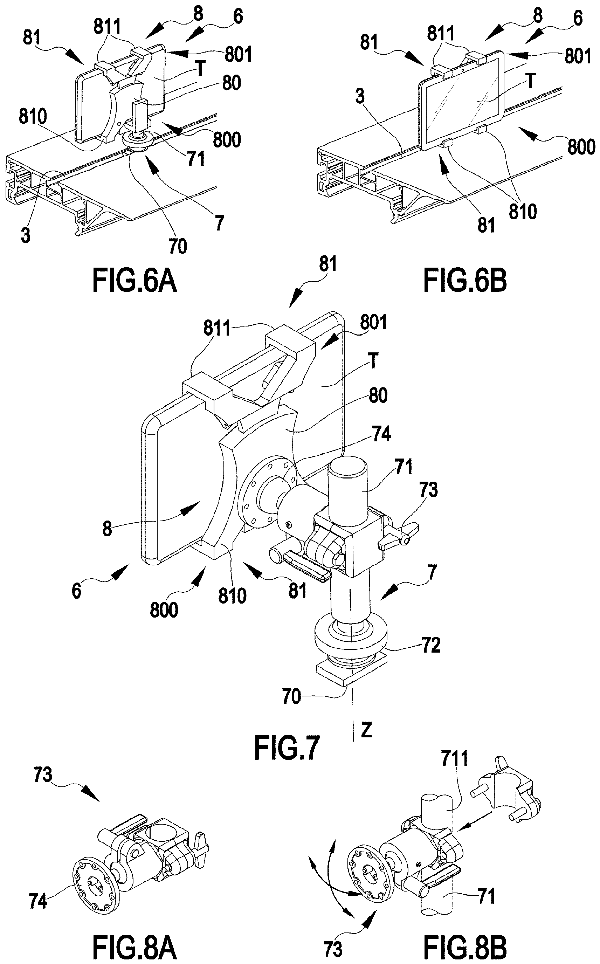

In the alternative embodiment shown in figures 7 - 10, the coupling means 7 have the same characteristics described for figures 4 - 6, but the pin 71 cannot rotate with respect to the sliding member 70, since said end 710 is fixed to said sliding member 70 by means of fixing means, such as for example a flaring head screw, which prevent any relative movement thereof.

In this case, the outer portion 711 of said pin 71 is directly coupled to the lower portion 800 of the tightening plate 80 by means of a wing nut 73, in particular, a wing nut 73, coupled to said pin 71, so as to be able to rotate on it. Therefore, the base 83 is not present, but the tablet T is still advantageously able to rotate and move.

In fact, it is possible to rotate the tightening plate 80, and therefore the tablet T associated with it, around the Z-axis of said pin 71, simply by acting on the tightening plate 80 itself.

Furthermore, between the wing nut 73 and the tightening plate 80 an angular joint 74 can be interposed, coupled to both elements, to allow the relative rotations of said tightening plate 80 along the axes of rotation transverse to the Z-axis of said pin 71.

Advantageously, therefore, the supporting member 6 of said machine 1 thus described, allows the movement of said tablet T, along said slot 3, and its rotation with respect to said Z-axis of said pin 71 and to any further transverse axes.

In this way, the tablet T is able to assume at least a first working configuration, facing outwards, for example, to be used when working on a panel using the carriage 5, and a second working configuration, in which it is directed towards the working bench 2, for example, to be used when working said panel on a fixed part of said working bench 2, as shown in figures 6, 10 and 12.

In this way, the tablet T can always be displayed, during any working carried out on the panel to be machined.

Finally, the supporting member 6 thus described advantageously allows modifying any machine 1 for working wooden panels and the like, which is equipped with at least one slot, thus allowing coupling with any device equipped with an external screen.

A further advantage of the apparatus 100 just described is that said device equipped with a screen, such as the tablet T, can be easily replaced or updated, without the need to send the entire machine 1 for repair.

Furthermore, by using the already existing sliding guides 3, it is possible to minimize the overall space of said machine 1.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) for working panels, such as wooden panels and the like, comprising
a working bench (2),
at least one working group (4), for working said panels to be worked on said working bench (2), and
guide means (3; 230) for guiding at least a movable element (6; 22) of said machine with respect to said working group (4),
wherein said machine (1) is **characterized**
**in that** it comprises a supporting member (6) comprising:
coupling means (7), couplable to, or arranged on said working bench (2), and
locking and release means (8), intended for locking and releasing a device provided with a screen (T), said locking and release means (8) being coupled to said coupling means (7); and
**in that** said supporting member (6) is movable with respect to said working group (4) by means of said guide means (3; 230);
so that said supporting member (6) allows the placement of said device provided with a screen (T) with respect to said working group (4).

2. Machine (1), according to the preceding claim, **characterized**
**in that** said guide means (3; 230) comprise a sliding guide (230), arranged along a sliding direction (X), and
**in that** said working bench (2) comprises
a stationary portion (21) with respect to said working group (4) and
a movable portion (22) with respect to said stationary portion (21), slidingly coupled to said sliding guide (230), for moving said movable portion (22) with respect to said stationary portion (21) along said sliding direction (X).

3. Machine (1) according to the preceding claim, **characterized in that** said supporting member (6) is coupled to said movable portion (22) of said working bench (2) by mean of said coupling means (7).

4. Machine (1) according to any one of the preceding claims, **characterized**
**in that** said guide means (3; 230) comprise a slot (3) arranged on said working bench (2) and oriented along a sliding direction (X), and
**in that** said coupling means (7) are slidingly coupled to said slot (3) and are able to be tightened in a removable manner to said slot (3).

5. Machine (1) according to claim 2 - 4, **characterized in that** said slot (3) is arranged on said movable portion (22) of said working bench (2).

6. Machine (1), according to any one of claims 4-5, **characterized in that** said coupling means (7) comprise
a sliding member (70), slidingly couplable to said at least one slot (3; 230), and
a pin (71), having an end (710) coupled to said sliding member (70), and an external portion (711), externally arranged to said at least one slot (3), wherein said external portion (711) is coupled to said locking and release means (8).

7. Machine (1) according to any one of claims 4 - 6, **characterized in that** said supporting member (6) comprises a nut tightening mechanism (72) for said removable tightening of said coupling means (7) to said slot (3).

8. Machine (1) according to any one of claims 6-7, **characterized in that** said end (710) of said pin (71) is rotatably coupled to said sliding member (70).

9. Machine (1) according to the preceding claim, **characterized in that** said supporting member (6) comprise an elastic ring for coupling said pin (71) and said sliding member (70).

10. Machine (1) according to any one of claims 6-7, **characterized**
**in that** said end (710) of said pin (71) is fixed to said sliding member (70), and
**in that** said coupling means (7) comprise a wing nut (73) coupled to said external portion (711) of said pin (71) and to said locking and release means (8),
wherein said wing nut (73) is capable of rotating around to said pin (71).

11. Machine (1) according to any one of the preceding claims, **characterized in that** said locking and release means (8) comprise a tightening plate (80) and two or more adjustable arms (81) each one fixed to said tightening plate (80) at one end.

12. Machine (1) according to any one of the preceding claims, **characterized in that** said locking and release means (8) comprise a charger device (84, 85), for charging the batteries of said device provided with a screen (T).

13. Machine (1) according to any one of the preceding claims, **characterized in that** it comprises said device provided with a screen (T).

14. Machine (1) according to the preceding claim, **characterized in that** said device provided with is a touchscreen type(T) screen, in particular a tablet (T).

15. Supporting member (6) for a machine (1) for working wooden panels and the like, wherein said machine (1) is provided with a working bench (2), a working group (4) and guide means (3; 230) for guiding at least one movable element (6; 22) on said machine (1) with respect to said working group (4), said supporting member (6) comprising
coupling means (7), couplable to said working bench (2), so that said supporting member (6) is movable with respect to said working group (4) by means of said guide means (3; 230), and
locking and release means (8), intended for locking and releasing a device provided with a screen (T), fixed to said coupling means (7).
